# EUROPÄISCHE PATENTANMELDUNG

(11) **EP 2 581 076 A1**
(43) Veröffentlichungstag der Anmeldung: **17.04.2013**
(21) Anmeldenummer: 12158140.9
(22) Anmeldetag: 05.03.2012
(51) Int. Cl.: A61J 7/02

(54) **Vorrichtung und Verfahren zur Überprüfung bewegter Tabletten**

(30) Priorität: 13.10.2011 EP 11185074
(71) Anmelder: Uhlmann Pac-Systeme GmbH & Co. KG, 88471 Laupheim (DE)
(72) Erfinder: Singer, Anton, 88471 Laupheim (DE)
(74) Vertreter: Wächter, Jochen

(57) **Zusammenfassung**

Die Vorrichtung zur Überprüfung von bewegten Tabletten (20) umfasst eine Entladevorrichtung (21) zum Entladen der vorbeigeführten Tabletten (20), eine stromab der Entladevorrichtung (21) angeordnete Aufladevorrichtung (23) zum Aufladen der vorbeigeführten entladenen Tabletten (20), und einen stromab der Aufladevorrichtung (23) angeordneten Ladungsdetektor (40), der die von der Aufladevorrichtung (23) auf die Tabletten (20) aufgebrachten Ladungen (22) detektiert.

## Beschreibung

Die vorliegende Erfindung betrifft eine Vorrichtung und ein Verfahren zur Überprüfung bewegter Tabletten.

Derartige Vorrichtungen und Verfahren werden in der pharmazeutischen Industrie beispielsweise zum Zählen von Tabletten während deren Abfüllung oder, in komplexeren Ausführungsformen, auch zur Überprüfung der Farbe, Form und teilweise auch der Inhaltsstoffe der Tabletten eingesetzt.

Eine dabei häufig verwendete Technik liegt darin, die Tabletten durch gegenüberliegende Platten eines mit einem hochfrequenten Wechselfeld geladenen Kondensators hindurchfallen zu lassen bzw. hindurchzubewegen. Aufgrund der hindurchtretenden Tablette wird auf den Kondensatorplatten ein Dipolmoment induziert, das von einem geeigneten Sensor ausgelesen werden kann. Eine derartige Vorrichtung ist beispielsweise aus EP 2 030 895 A1 bekannt.

Eine andere Ausgestaltung eines solchen kapazitiven Sensors mit mehr als zwei Kondensatorplatten, die ansonsten nach demselben Prinzip arbeiten, ist beispielsweise aus US 6,504,387 B1 bekannt.

Der Nachteil sämtlicher kapazitiver Messverfahren liegt in erster Linie darin, dass die Tabletten während des Hindurchtretens durch den Detektor eine definierte Ausrichtung beibehalten müssen, damit verwertbare Messergebnisse bei akzeptabler Toleranz erhalten werden. Insbesondere bei sich drehenden oder von einer günstigen Bahn abweichenden Tabletten werden abweichende Messerergebnisse erzielt, sodass eine sichere Detektion gebrochener Tabletten und deren nachfolgende Ausscheidung nicht unter allen Umständen gewährleistet werden kann.

Der vorliegenden Erfindung liegt daher die Aufgabe zugrunde, eine Vorrichtung zur Überprüfung bewegter Tabletten zu schaffen, mit der die Tabletten unabhängig von der Vorgeschichte der Tabletten innerhalb des Füllprozesses und auch unabhängig von ihrer Ausrichtung im Sensorfeld erfasst und ausgewertet werden können und eine zuverlässige Detektion von gebrochenen Tabletten selbst bei hohem Durchsatz gewährleistet ist. Außerdem soll ein entsprechendes Verfahren zur Überprüfung bewegter Tabletten angegeben werden.

Diese Aufgabe wird durch die Merkmale des Anspruchs 1 bzw. des Anspruchs 13 gelöst.

Erfindungsgemäß weist die Vorrichtung zur Überprüfung bewegter Tabletten eine Entladevorrichtung zum Entladen der vorbeigeführten Tabletten, eine stromab der Entladevorrichtung angeordnete Aufladevorrichtung zum Aufladen der vorbeigeführten entladenen Tabletten, und einen stromab der Aufladevorrichtung angeordneten Ladungsdetektor auf, der die von der Aufladevorrichtung auf die Tabletten aufgebrachten Ladungen detektiert.

Mit dieser Ausgestaltung gelingt es, unabhängig davon, welchen Einflüssen die jeweilige Tablette vor dem Eintritt in die Vorrichtung zur Überprüfung bewegter Tabletten unterworfen war, und unabhängig von der Ausrichtung der Tablette im Sensorfeld, eine robuste und sichere Erkennung von hinsichtlich ihrer Größe guten und schlechten Tabletten durchzuführen.

Vorzugsweise ist der Ladungsdetektor mit einer Auswerteeinheit verbunden, die auf Basis der vom Ladungsdetektor gemessenen Werte eine dem Ladungsdetektor nachgeschaltete Sortiereinrichtung für die Tabletten steuert. Auf diese Weise geschieht die Ausscheidung fehlerhafter Tabletten unmittelbar nach deren Detektion und ist besonders sicher.

Eine Verfälschung der Messergebnisse kann effektiv verhindert werden, wenn die Aufladevorrichtung unmittelbar hinter der Entladevorrichtung angeordnet ist.

Vorzugsweise ist die Entladevorrichtung im Bereich eines Schwingförderers für die Tabletten angeordnet und als Ionisationsstab ausgebildet. Auf diese Weise erfolgt die Entladung auf einfache und schnelle Weise.

Eine ungewünschte Aufladung oder Entladung der Tabletten hinter der Aufladevorrichtung wird dadurch gezielt verhindert, dass die Aufladevorrichtung vorzugsweise in einem Endbereich eines Schwingförderers für die Tabletten angeordnet ist.

In einer bevorzugten Ausführungsform weist die Aufladevorrichtung ein geerdetes Gehäuse und ein abgeschirmtes Hochspannungskabel, das mit einer Hochspannungsquelle verbunden ist, auf, wobei das abgeschirmte Hochspannungskabel innerhalb des Gehäuses in einer Entladungsspitze mündet. Auf diese Weise gelingt eine gezielte Ladungsübertragung auf die Tabletten.

Noch gezielter ist die Richtung des erzeugten Ionenwindes, wenn die Entladungsspitze zudem in einen kegelförmigen, nach unten offenen Hohlraum eines Kunststoffklotzes innerhalb des Gehäuses hineinragt.

Der Ladungsdetektor weist vorzugsweise ein als Hohlkörper ausgebildetes Sensorelement mit einem geschlossenen umlaufenden Mantel aus einem leitenden Material, einer offenen oberen Eintrittsseite und einer offenen unteren Austrittsseite auf. Dabei definiert das Sensorelement in seinem Innenraum von der Eintrittsseite zur Austrittsseite einen Durchgangspfad für die Tabletten. Außerdem ist der Mantel über einen Widerstand geerdet. Der Ladungsdetektor umfasst weiterhin mindestens ein nahe der Außenfläche des Mantels des Sensorelements angeordnetes Aufnahmeelement aus leitendem Material, das von der Außenfläche des Mantels des Sensorselements galvanisch getrennt ist. Dadurch gelingt es, dass der Ladungsdetektor unabhängig von der Durchtrittsposition der Tabletten durch den Sensor sowie unabhängig von ihrer Orientierung eine sichere Unterteilung gewährleisten kann.

Zur besseren Auswertung ist das Aufnahmeelement vorzugsweise mit einer Umwandlungs-/ Verstärkungseinheit verbunden ist, welche die im Aufnahmeelement bei Durchtritt einer Tablette durch das Sensorelement erzeugten Spannungsimpulse in ein auswertbares Signal umwandelt oder verstärkt.

Um eine nachgeschaltete Auswurfeinrichtung gezielt ansteuern zu können, umfasst die Vorrichtung vorzugweise auch eine Auswerteeinheit für die Signale der Umwandlungs-/ Verstärkungseinheit, welche dazu geeignet ist, einen Vergleich zwischen Sollwerten der Umwandlungs-/ Verstärkungseinheit für eine bestimmte Tablettensorte und den von der Umwandlungs-/ Verstärkungseinheit gelieferten Ist-Werten durchzuführen.

Vorzugsweise ist das Sensorelement als kurzer Hohlzylinder mit im Wesentlichen kreisförmigem Querschnitt ausgebildet. Die Kreisform führt zu einer gleichmäßigen Verschiebung der Ladungen an der Außenfläche des Mantels des Sensorelements bei Durchtritt einer Tablette durch das Sensorelement, sodass die Ladung ohne abweichende Messergebnisse an jeder beliebigen Stelle der Außenfläche des Mantels abgegriffen werden kann.

Ein besonders geeignetes Material des Mantels des Sensorelements ist ein leitendes Metall, beispielsweise Edelstahl oder Aluminium.

Da sich die Ladungsdichte an der Außenfläche des Mantels in Abhängigkeit von der Tablet-tengröße ändert, sind zur Detektion unterschiedlicher Tablettengrößen mit demselben Sensoraufbau vorzugsweise mehrere Aufnahmeelemente mit zugehörigen Umwandlungs-/ Verstärkungseinheiten um die Außenfläche des Mantels des Sensorelements verteilt, wobei jeder Sensorpfad unterschiedlich kalibriert ist.

Vorzugsweise ist die galvanische Trennung zwischen Sensorelement und Aufnahmeelement durch ein Isolationselement in Form einer Isolationsschicht auf dem Aufnahmeelement hervorgerufen.

Der Mantel des Sensorelements weist vorzugsweise eine Dicke von zwischen 0,2 und 0,8 mm sowie einen Durchmesser von zwischen 10 und 60 mm auf. Der Abstand zwischen der Eintrittsseite und der Austrittsseite liegt vorzugsweise zwischen 5 und 20 mm. Mit diesen geometrischen Ausmaßen gelingt es, eine Vielzahl verschiedener Tablettenformen zuverlässig ohne weitere Einstellungen zu detektieren.

Bei Verwendung eines Widerstands zwischen Mantel und Erde von zwischen 10 und 500 MΩ, vorzugweise zwischen 200 und 300 MΩ, wird der Aufbau einer elektrostatischen Aufladung verhindert, die eine Signaldrift zur Folge hätte. Gleichzeitig ist der Widerstand notwendig, damit die elektrischen Ladungen nicht sofort abfließen und somit überhaupt ein Influenzeffekt am Aufnahmeelement registriert wird.

Das Aufnahmeelement ist vorzugweise als Platte ausgebildet, die beispielsweise eine dem Mantel zugewandte Fläche von ca. 5 mal 5 mm aufweist. Auf diese Weise wird besonders einfach eine Ladungstrennung im Aufnahmeelement induziert, welche der ursprünglichen Information aus dem Inneren des Sensorelements entspricht.

Das erfindungsgemäße Verfahren zur Überprüfung bewegter Tabletten weist folgende Schritte auf: Entladen von vorbeigeführten Tabletten in einer Entladevorrichtung; Aufladen der vorbeigeführten entladenen Tabletten in einer Aufladevorrichtung; und Detektieren der von der Aufladevorrichtung auf die Tabletten aufgebrachten Ladungen in einem Ladungsdetektor.

Dieses Überprüfungsverfahren ist äußerst robust und sicher.

Vorzugsweise steuert eine Auswerteeinheit auf Basis der vom Ladungsdetektor gemessenen Werte eine dem Ladungsdetektor nachgeschaltete Sortiereinrichtung für die Tabletten, um eine sichere Ausschleusung fehlerhafter Tabletten unmittelbar nach deren Detektion zu gewährleisten.

Besonders bevorzugt ist es hierbei, wenn der Schritt des Aufladens unmittelbar nach dem Schritt des Entladens erfolgt, und wenn zwischen dem Schritt des Aufladens und dem Schritt des Detektierens der Ladungen eine weitere Aufladung oder eine Entladung der Tabletten verhindert wird.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Querschnittsansicht einer Ausführungsform der erfindungsgemäßen Vorrichtung zur Überprüfung bewegter Tabletten;
- Fig. 2: ist ein Graph, der eine mögliche Ladungsentwicklung auf einer Tablette in den verschiedenen Positionen eines Füllvorgangs bei Einsatz der erfindungsgemäßen Vorrichtung zur Überprüfung bewegter Tabletten zeigt,
- Fig. 3: ist eine schematische Ansicht einer Ausführungsform der Entladevorrichtung;
- Fig. 4: ist eine schematische Ansicht einer Ausführungsform der Aufladevorrichtung;
- Fig. 5: ist eine schematische Querschnittsansicht einer Ausführungsform des Ladungsdetektors mit einer durch ihn hindurchfallenden Tablette;
- Fig. 6: ist eine Querschnittsansicht des Ladungsdetektors aus Fig. 5 in einer Ebene senkrecht zur Ansichtsebene der Fig. 5 inklusive eines vergrößerten Ausschnitts;
- Fig. 7a bis 7c: sind Spannungsdiagramme, die mit der erfindungsgemäßen Vorrichtung zum Überprüfen bewegter Tabletten erhalten wurden; und
- Fig. 8: ist eine schematische Querschnittsansicht einer Tablettenabfülleinheit mit einer integrierten erfindungsgemäßen Vorrichtung zur Überprüfung bewegter Tabletten.

Im Folgenden soll unter dem Begriff "Tablette" jegliche Form von pharmazeutischen Produkten verstanden werden, die fest sind und pharmazeutische Wirkstoffe enthalten, beispielsweise Dragees, Oblongs, Kapseln usw.

Die vorliegende Erfindung basiert auf dem Prinzip der Detektion von Ladungen, vorzugsweise negativen Ladungen, die sich auf der Oberfläche von Tabletten ansammeln und beim Durchtritt durch einen Ladungsdetektor detektiert werden.

Im Verlauf eines Abfüllprozesses von Tabletten tritt meist eine Aufladung der Tabletten auf, beispielsweise beim Transport der Tabletten auf einer Vibrationsrinne oder an anderen Stellen des Transportweges, die in erster Linie auf Reibung zurückzuführen ist. Diese vorgefundene elektrostatische Aufladung der Tabletten ist allerdings sehr verschieden. Es können positive und negative Werte in Bereichen von 100 kV/m bis 2MV/m auftreten, die eine Zuordnung der Messergebnisse zu guten oder schlechten Tabletten nicht zulassen. Erfindungsgemäß werden daher die Tabletten zunächst entladen, dann gezielt aufgeladen und erst anschließend mit einem Ladungsdetektor detektiert.

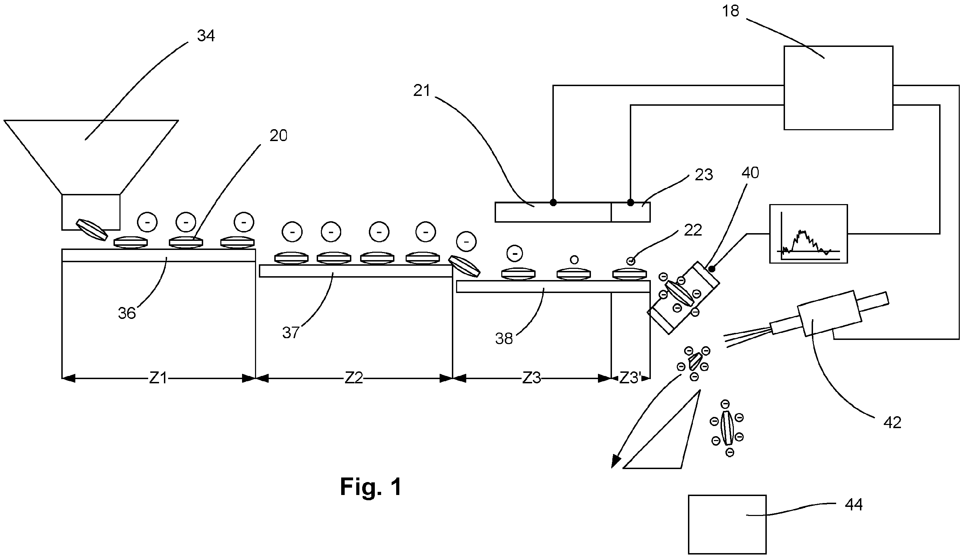

In Fig. 1 ist ein beispielhafter Aufbau eines Füllsystems mit einer Vorrichtung zur Überprüfung bewegter Tabletten gemäß der vorliegenden Erfindung dargestellt. Anhand dessen soll nun der Ablauf beschrieben werden.

Die Tabletten 20 sind zunächst in einem Vorratsbehälter 34 als Schüttgut gelagert. Von dort gelangen sie auf eine Fördereinrichtung, welche die Tabletten zumindest teilsweise vereinzelt. Im vorliegenden Fall ist die Fördereinrichtung ein Schwingförderer mit drei Stufen bzw. Abschnitten 36, 37, 38. Die Tabletten 20 werden, vorzugsweise im Bereich des letzten Abschnitts 38 des Schwingförderers, mittels einer Entladevorrichtung 21 gezielt entladen bzw. deren elektrostatische Ladungen neutralisiert, und mittels einer stromab der Entladevorrichtung 21 angeordneten Aufladevorrichtung 23 gezielt mit einer Ladung 22 aufgeladen. Diese Ladung 22 wird entsprechend dem gewünschten Einsatzzweck gewählt, ist aber in der Regel nicht besonders groß, um den weiteren Abfüllprozess nicht negativ zu beeinflussen. Anschließend treten die vereinzelten Tabletten 20 durch einen Ladungsdetektor 40, der beim Durchtritt der Tabletten die definierte elektrostatische Ladung 22 misst und die Messwerte an eine Auswerteeinheit 18 weiterleitet. Die Auswerteeinheit 18 überprüft die Validität der Tabletten 20, wie im Folgenden noch näher beschreiben wird, und steuert dementsprechend eine Sortiervorrichtung 42 zur Trennung von guten und schlechten Tabletten 20. Die guten Tabletten gelangen anschließend in die gewünschten Behälter 44, vorzugsweise Dosen oder Flaschen. Neben der Überprüfung der Validität der Tabletten 20 kann der Ladungsdetektor 40 auch zur Zählung der (guten) Tabletten 20 verwendet werden.

Im dargestellten Fall ist die Sortiervorrichtung 42 als Blasdüse zur Ausscheidung schlechter Tabletten 20 ausgebildet, sie kann aber auch anders ausgestaltet sein, beispielsweise als mechanische Weiche. Die Sortiervorrichtung 42 kann auch die guten Tabletten 20 von ihrem normalen Pfad ablenken, sogenannte Gut-Ausscheidung.

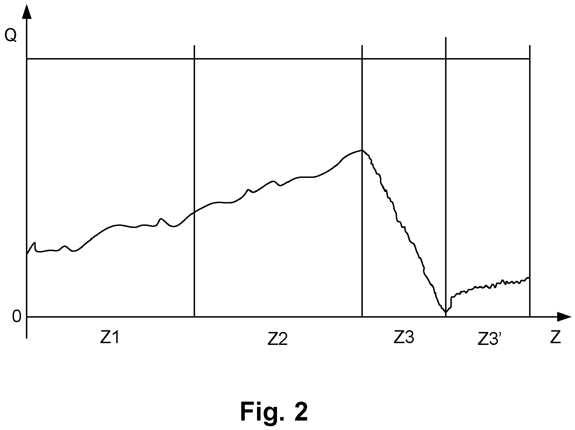

In Fig. 2 ist beispielhaft ein Graph der elektrostatischen Aufladung Q einer Tablette 20 in verschiedenen Zonen Z der Fördereinrichtung dargestellt. Zone Z1 entspricht hier dem ersten Abschnitt 36 des Schwingförderers, Zone Z2 dem zweiten Abschnitt 37 des Schwingförderers, Zone Z3 dem Bereich des dritten Abschnitts 38 des Schwingförderers, der vor der Aufladevorrichtung 23 liegt, und Zone Z3' dem Bereich des dritten Abschnitts 38 des Schwingförderers, in dem die Aufladevorrichtung 23 angeordnet ist.

Wie zu sehen ist, steigt im Beispielsfall die Aufladung der Tabletten 20 in den Zonen Z1 und Z2 stetig aufgrund von Reibung an. Anschließend wird diese willkürliche, ungewünschte Ladung in der Zone Z3 mittels der Entladevorrichtung 21 auf nahezu Null reduziert. Schließlich erhalten die Tabletten 20 in der Zone Z3' durch die Aufladevorrichtung 23 eine geringfügige, vorbestimmte Ladung 22, die der weiteren Auswertung zugrunde gelegt wird.

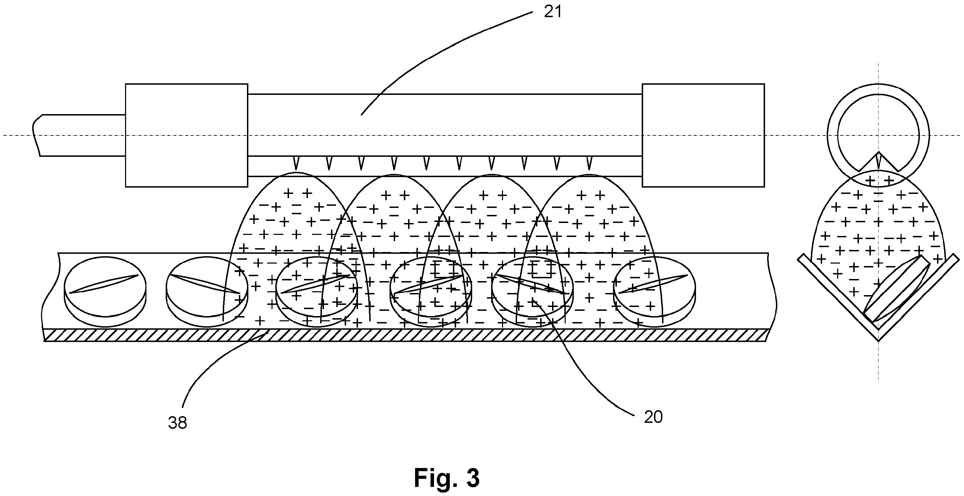

Fig. 3 zeigt eine Ausführungsform der Entladevorrichtung 21. Die geladenen Tabletten 20 werden im Abschnitt 38 des Schwingförderers unter der Entladevorrichtung 21, die hier als Ionisationsstab ausgebildet ist, hindurch gefördert. Die Entladevorrichtung 21 erzeugt wechselweise positive und negative Ionen, die von den entgegengesetzten Ladungen auf den Tabletten 20 angezogen werden. Dabei werden die Oberflächen der Tabletten 20 entladen bzw. neutralisiert. Überschüssige Ionen beider Polaritäten werden an den geerdeten, metallenen Abschnitt 38 des Schwingförderers abgegeben und neutralisiert.

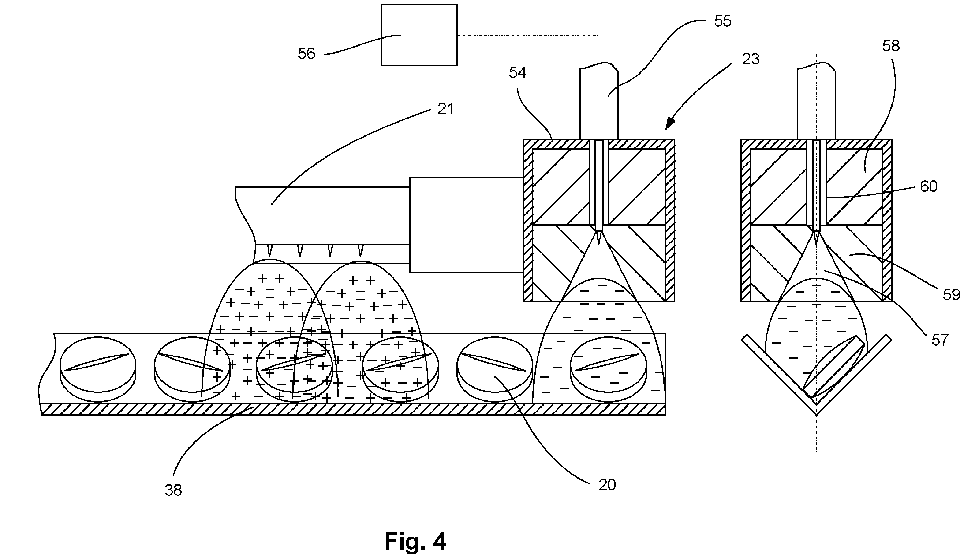

Fig. 4 zeigt eine Ausführungsform der Aufladevorrichtung 23. Die durch die Entladevorrichtung 21 neutralisierten Tabletten 20 werden auf dem Abschnitt 38 des Schwingförderers weiter zur Aufladevorrichtung 23 gefördert. Die Aufladevorrichtung 23 besteht aus einem abgeschirmten, geerdeten Metallgehäuse 54 und einem abgeschirmten Hochspannungskabel 55, das mit einer Hochspannungsquelle 56 verbunden ist. Das abgeschirmte Hochspannungskabel 55 wird durch zwei Kunststoffklötze 58, 59 hindurchgeführt und mündet in einer Entladungsspitze 60. Die Entladungsspitze 60 ragt in einen kegelförmigen Hohlraum 57 des Klotzes 59. Beim Anlegen einer Hochspannung, vorzugsweise zwischen 5 und 10 kV, entsteht an der Entladungsspitze 60 ein Ionenwind aus negativen Ionen in Richtung der Tabletten 20. Die Oberflächen der neutralen Tabletten 20 nehmen die negativen Ionen auf. Dabei entsteht eine definierte Ladungsdichte auf den Tabletten 20.

Es sind noch andere Ausgestaltungen der Aufladevorrichtung 23 und Entladevorrichtung 21 denkbar.

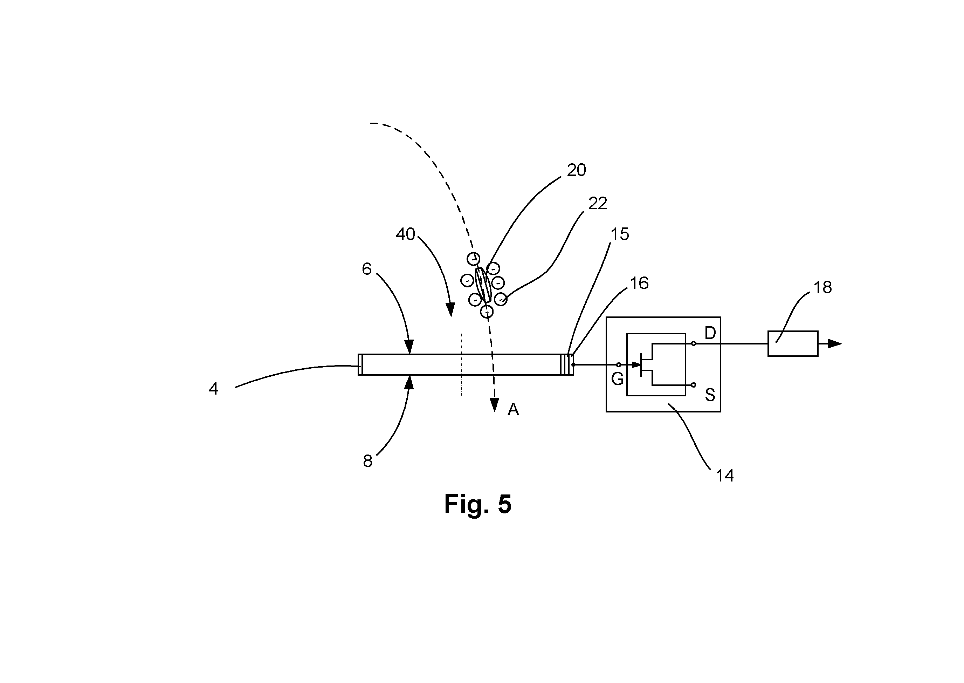

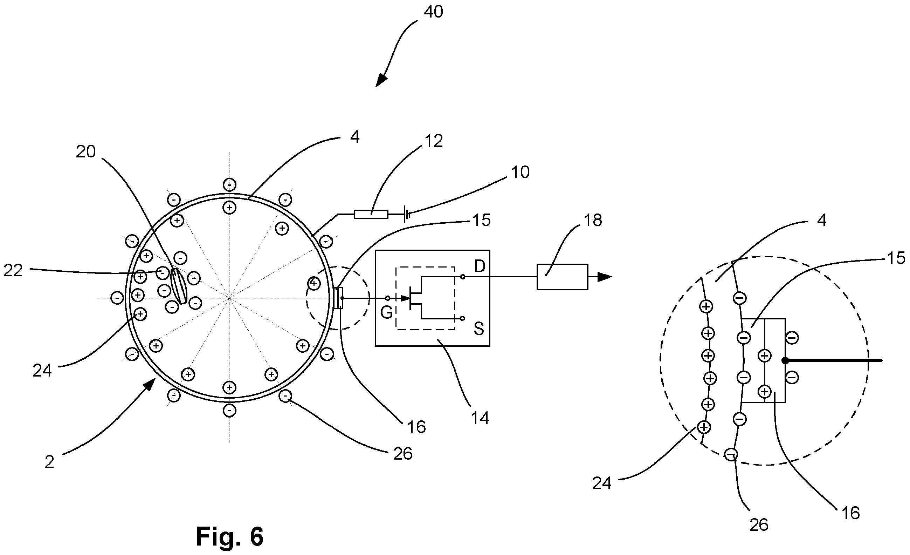

In Fig. 5 und 6 ist eine Ausführungsform des Ladungsdetektors 40 in zwei verschiedenen Ansichten dargestellt. Der Ladungsdetektor 40 umfasst ein Sensorelement 2, das als Hohlkörper ausgebildet ist und einen geschlossenen umlaufenden Mantel 4 aus einem leitenden Material aufweist. Außerdem weist das Sensorelement 2 eine offene obere Eintrittsseite 6 sowie eine offene untere Austrittsseite 8 auf. In der dargestellten bevorzugten Ausführungsform ist das Sensorelement 2 als kurzer Hohlzylinder mit im Wesentlichen kreisförmigem Querschnitt ausgebildet.

Der Mantel 4 des Sensorelements 2 ist vorzugsweise aus Metall gebildet, beispielsweise aus Edelstahl oder Aluminium. Der Mantel 4 weist vorzugsweise eine Dicke von zwischen 0,2 und 0,8 mm auf sowie einen Durchmesser von zwischen 10 und 60 mm. Der Abstand zwischen der Eintrittsseite 6 und der Austrittsseite 8 des Sensorelements 2 beträgt vorzugweise zwischen 5 und 20 mm.

Der Mantel 4 des Sensorelements 2 ist über einen Widerstand 12, vorzugsweise hochohmig, geerdet. Hierzu ist die Außenfläche des Mantels 4 über den Widerstand 12 mit Erde 10 verbunden. Der Widerstand 12 beträgt dabei zwischen 10 und 500 MΩ, vorzugweise zwischen 200 und 300 MΩ.

Der Ladungsdetektor 40 weist außerdem mindestens ein nahe der Außenfläche des Mantels 4 des Sensorelements 2 angeordnetes Aufnahmeelement 16 aus leitendem Material auf, dessen Signale durch eine Umwandlungs-/ Verstärkungseinheit 14 verarbeitet werden.

Das Aufnahmeelement 16 ist ebenso wie der Mantel 4 des Sensorelements 2 aus Metal gebildet, vorzugweise aus Edelstahl oder Aluminium. Das Aufnahmeelement 16 ist vorzugsweise als Platte ausgebildet. Diese Platte kann vorzugsweise eine dem Mantel 4 zugewandte Fläche von etwa 5 mal 5 mm aufweisen.

Das Aufnahmeelement 16 ist von der Außenfläche des Mantels 4 des Sensorelements 2 galvanisch getrennt. Die galvanische Trennung zwischen Sensorelement 2 und Aufnahmeelement 16 wird durch ein Isolationselement 15 hervorgerufen, vorzugweise in Form einer Isolationsschicht auf dem Aufnahmeelement 16. Diese kann beispielsweise durch ein isolierendes Klebeband gebildet sein. Viele andere Isolationselemente 15 kommen ebenso in Frage.

Es können auch mehrere Aufnahmeelemente 16 um die Außenfläche des Mantels 4 des Sensorelements 2 verteilt sein. Hierzu sind vorzugsweise auch entsprechend mehrere Umwandlungs-/ Verstärkungseinheiten 14 vorgesehen. Jeder Sensorpfad ist vorzugsweise unterschiedlich kalibriert.

Die Umwandlungs-/ Verstärkungseinheit 14 kann auf verschiedenste Weisen ausgestaltet sein. Wichtig hierbei ist, dass die im Aufnahmeelement 16 bei Durchtritt einer Tablette 20 durch das Sensorelement 2 durch doppelte Influenz induzierte Ladungstrennung weiterverarbeitet wird, wobei als Ausgangspunkt für die weitere Umwandlung/Verstärkung die Spannungsimpulse im Aufnahmeelement 16 dienen.

In der dargestellten beispielhaften Ausführungsform ist die Umwandlungs-/ Verstärkungseinheit 14 als FET-Transistor dargestellt, dessen Gate G mit dem Aufnahmeelement 16 verbunden ist. Ebenso sind andere Transistoren, gegebenenfalls mit zusätzlichen Spannungsanschlüssen, denkbar. Es ist auch möglich, in, vor oder nach der Umwandlungs-/ Verstärkungseinheit 14 weitere Signalbearbeitungsmaßnahmen (Invertierung, Glättung, Potenzierung etc.) durchzuführen.

Die Umwandlungs-/ Verstärkungseinheit 14 ist vorzugsweise mit der Auswerteeinheit 18 für die Signale der Umwandlungs-/ Verstärkungseinheit 14 verbunden. Diese Auswerteinheit 18 ist dazu geeignet, einen Vergleich zwischen Sollwerten der Umwandlungs-/ Verstärkungseinheit 14 für eine bestimmte Tablettensorte und den von der Umwandlungs-/ Verstärkungseinheit 14 gelieferten Ist-Werten durchzuführen. Im dargestellten Beispielsfall wird das Signal der Drain D des FET-Transistors an die Auswerteeinheit 18 geliefert. Auf Basis des Ergebnisses der Auswerteeinheit 18 kann anschließend die in Fig. 1 dargestellte Sortiereinrichtung 42 für die Tabletten 20 gesteuert werden.

Im Folgenden soll das Funktionsprinzip des Ladungsdetektors 40 anhand von Fig. 5 und 6 genauer beschrieben werden. Die Tabletten 20 führen beim Durchtritt durch den Ladungsdetektor 40 aufgrund der vorangegangenen Entladung und der daran anschließenden gezielten geringfügigen Aufladung eine definierte elektrostatische Ladung 22, vorzugsweise eine negative Ladung, mit sich. Durch die verschieden großen Oberflächen von ganzen Tabletten 20 bzw. Bruchstücken von Tabletten ist deren entsprechende individuelle Ladung unterschiedlich, ebenso die elektrischen Feldstärken an deren Oberfläche. Diese Ladung soll nun genutzt werden, um die Tabletten 20 mit dem Ladungsdetektor 40 zu überprüfen.

Die Tablette 20 bewegt sich nun entlang eines Durchgangspfades A durch das Sensorelement 2. Im Beispielsfall der Fig. 5 geschieht dies im freien Fall. Beim Durchtritt der Tablette 20 durch den Innenraum des Sensorelements 2 von der Eintrittsseite 6 zur Austrittsseite 8 erzeugen die vorhandenen Ladungen 22 auf den Tabletten 20 durch Influenz eine Ladungstrennung im elektrisch leitenden Mantel 4 und somit auf der Innenseite des Mantels 4 eine Anhäufung von Ladungen 24 (Fig. 6) mit entgegengesetztem Vorzeichen zu den Ladungen 22 auf den Tabletten 20. Mit anderen Worten bewirkt das elektrostatische Feld der Tabletten 20 beim Durchfallen durch das Sensorelement 2 durch Influenz eine Ladungstrennung. Die Ladungsdichte der aufgrund der Ladungstrennung erzeugten Ladungen 24 ist an der Innenfläche des Mantels 4 in unmittelbarer Nähe zur elektrisch geladenen Tablette 20 größer als an weiter von der Tablette 20 entfernten Bereichen der Innenfläche des Mantels 4, wie aus Fig. 6 hervorgeht.

Auf der Außenfläche des Mantels 4 hingegen wird aufgrund der Ladungstrennung eine Ladungsverschiebung der Ladungen 26 erzeugt, welche vom Vorzeichen den Ladungen 22 der Tablette 20 entsprechen. Auf der Außenfläche des Mantels 4 ist die Ladungsdichte bei ringförmigem Mantel 4 gleichmäßig.

Dies bedeutet, dass gleich lange Teilabschnitte der Außenfläche des Mantels 4 überall die gleiche elektrostatische Teilfeldstärke besitzen, und die Summe dieser Teilfeldstärken stimmt mit der vorhandenen elektrostatischen Feldstärke im Inneren des Mantels 4 überein. Die Höhe der Ladungsdichte auf der Außenfläche des Mantels 4 wird durch die Ladung 22 der hindurchtretenden Tablette 20 bestimmt. Insofern ist die Teilfeldstärke an jedem Abschnitt der Außenfläche des Mantels 4 direkt proportional zur Ladung der durch das Sensorelement 2 tretenden Tablette 20.

Bei der vorzugsweise verwendeten Ringform bzw. dem kreisförmigen Querschnitt des Mantels 4 ist der Ort, an dem die Tablette 20 im Innenraum durch das Sensorelement 2 tritt, ohne Einfluss auf die erzeugte elektrostatische Feldstärke jedes Teilabschnitts der Außenfläche des Mantels 4.

Diese gleichmäßige elektrostatische Feldstärke an der Außenfläche des Mantels 4, welche die ursprüngliche Information der Ladung der Tablette 20 beinhaltet, bewirkt nun in dem elektrisch leitenden Aufnahmeelement 16 aufgrund des elektrischen Feldes an der Außenfläche des Mantels 4 wiederum mittels Influenz eine Ladungstrennung, wie insbesondere in der vergrößerten Darstellung rechts in Fig. 6 zu erkennen ist.

Die dabei entstehenden Spannungsimpulse werden in der Umwandlungs-/ Verstärkungseinheit 14 entsprechend umgewandelt und/oder verstärkt und an die Auswerteeinheit 18 übermittelt. Wichtig hierbei ist, dass das Aufnahmeelement 16 und der Mantel 4 galvanisch getrennt sind. Die hochohmige Erdung des Mantels 4 durch den Widerstand 12 verhindert den Aufbau einer elektrostatischen Aufladung, die eine Signaldrift zur Folge hätte. Gleichzeitig sorgt der Widerstand 12 dafür, dass die an der Außenfläche des Mantels 4 entstehenden elektrischen Ladungen 26 nicht sofort abfließen und somit überhaupt ein Influenzeffekt am Aufnahmeelement 16 registriert wird.

Die Auswerteeinheit 18 vergleicht nun die von der Umwandlungs-/ Verstärkungseinheit 14 gelieferten Ist-Werte mit gespeicherten Sollwerten für eine entsprechende Tablettensorte. Die Sollwerte können hierbei vorzugsweise durch Testläufe mit intakten Tabletten im Rahmen einer Kalibrierung erhalten werden.

Bei Abweichung vom vorgegebenen Sollwert (z.B. hinsichtlich der Signalhöhe bzw. des Integrals der Signalkurve) um einen vorbestimmten Wert oder Prozentsatz kann somit ein durch das Sensorelement 2 fallendes Bruchstück einer Tablette entdeckt und durch die nachgeschaltete Sortiereinrichtung 42 (Fig. 1) entfernt werden. Da die Ladungswechsel sehr schnell erfolgen, kann für jede Tablette 20 eine Auswertung erfolgen, bevor die nächste Tablette 20 das Sensorelement 2 erreicht.

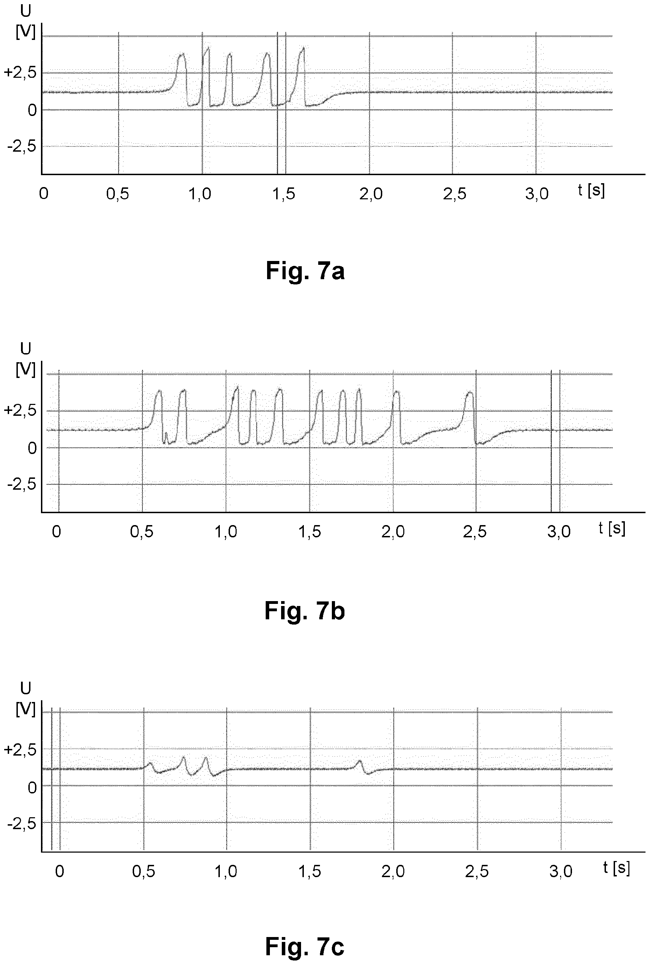

Fig. 7a zeigt die Auftragung der aus der Umwandlungs-/ Verstärkungseinheit 14 stammenden Spannungssignale (in V) über der Zeit (in s) für fünf ganze Tabletten. Deutlich erkennt man die nahezu gleichmäßige Form und Höhe der entsprechenden Peaks.

Fig. 7b zeigt eine identische Darstellung für zehn ganze Tabletten, während Fig. 7c die Darstellung für vier Tablettenbruchstücke zeigt. Bei Einstellung eines geeigneten Schwellwertes kann somit jeder klinisch relevante Bruch von Tabletten detektiert und die entsprechenden Bruchstücke ausgeschieden werden. Besonders wichtig hierbei ist, dass die Orientierung der Tablette, ihr Bewegungsverlauf und ihr Durchtrittsort durch das Sensorelement 2 nahezu keinen maßgeblichen Einfluss auf das Messergebnis haben.

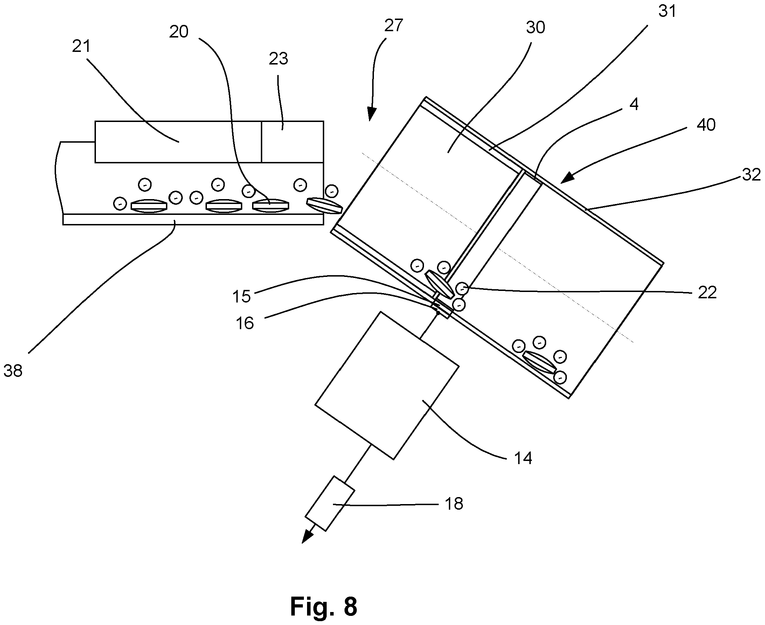

In Fig. 8 ist eine besonders bevorzugte Anordnung des Ladungsdetektors 40 in einer Tablettenabfülleinheit 27 dargestellt. Die Tablettenabfülleinheit 27 zeigt wiederum den letzten Abschnitt 38 eines Schwingförderers, mit dem die Tabletten 20 zu einem Füllrohr 30 transportiert werden. Im Mantel 32 des Füllrohrs 30 ist nunmehr das Sensorelement 2 des Ladungsdetektors 40 integriert. Der Mantel 32 besteht üblicherweise aus isolierendem Kunststoff. Oberhalb des Sensorelements 2 kann ein rohrstutzenförmiger Einsatz 31 aus Metall im Füllrohr 30 vorgesehen sein, auf dem die Tabletten 20 entlanggleiten. Aus Gründen der Übersichtlichkeit sind nicht alle Elemente der Vorrichtung zur Überprüfung bewegter Tabletten dargestellt; allerdings entspricht der Aufbau der Vorrichtung dem aus Fig. 1.

Wichtig bei dieser Ausführungsform ist, dass der Mantel 4 des Sensorelements 2 im Vergleich zum stromauf gelegenen Innenabschnitt des Füllrohrs 30, im dargestellten Beispielsfall zur Innenfläche des Einsatzes 31, etwas zurückgesetzt ist, damit die Tablette 20 beim Durchlaufen des Füllrohrs 30 nicht die Innenfläche des Mantels 4 berührt, da dies die Messung verfälschen würde. Dementsprechend müssen die Innenradien des Mantels 32 bzw. des Einsatzes 31 des Füllrohrs 30 sowie des Mantels 4 des Sensorelements 2 entsprechend aufeinander abgestimmt sein. Außerdem sind hierbei die Neigung des Füllrohrs 30 sowie die Geschwindigkeit der Tablette 20 zu berücksichtigende Faktoren. Davon abgesehen ist die Funktionsweise der Vorrichtung zum Überprüfen bewegter Tabletten identisch wie oben beschrieben.

In der dargestellten bevorzugten Ausführungsform des Ladungsdetektors 40 wurde bislang ausschließlich ein Aufnahmeelement 16 dargestellt. Es ist allerdings möglich, mehrere Aufnahmeelemente 16, beispielsweise zwei oder vier Aufnahmeelemente 16, gleichmäßig verteilt um das Sensorelement 2 herum anzuordnen. Auch die dargestellte Kreisform des Mantels 4 des Sensorelements 2 kann leichten Abwandlungen unterliegen in Richtung einer Ovalität, obwohl die Kreisform bevorzugt ist. Schließlich kann das Aufnahmeelement 16 auch weiter beabstandet vom Mantel 4 angeordnet sein, als es in der Zeichnung dargestellt ist.

## Patentansprüche

1. Vorrichtung zur Überprüfung von bewegten Tabletten (20) mit
einer Entladevorrichtung (21) zum Entladen der vorbeigeführten Tabletten (20);
einer stromab der Entladevorrichtung (21) angeordneten Aufladevorrichtung (23) zum Aufladen der vorbeigeführten entladenen Tabletten (20); und
einem stromab der Aufladevorrichtung (23) angeordneten Ladungsdetektor (40), der die von der Aufladevorrichtung (23) auf die Tabletten (20) aufgebrachten Ladungen (22) detektiert.

2. Vorrichtung nach Anspruch 1, **dadurch gekennzeichnet, dass** der Ladungsdetektor (40) mit einer Auswerteeinheit (18) verbunden ist, die auf Basis der vom Ladungsdetektor (40) gemessenen Werte eine dem Ladungsdetektor (40) nachgeschaltete Sortiereinrichtung (42) für die Tabletten (20) steuert.

3. Vorrichtung nach Anspruch 1 oder 2, **dadurch gekennzeichnet, dass** die Aufladevorrichtung (23) unmittelbar hinter der Entladevorrichtung (21) angeordnet ist.

4. Vorrichtung nach einem der vorangehenden Ansprüche, **dadurch gekennzeichnet, dass** die Entladevorrichtung (21) im Bereich eines Schwingförderers (36, 37, 38) für die Tabletten (20) angeordnet und als Ionisationsstab ausgebildet ist.

5. Vorrichtung nach einem der vorangehenden Ansprüche, **dadurch gekennzeichnet, dass** die Aufladevorrichtung (23) in einem Endbereich (Z3') eines Schwingförderers (36, 37, 38) für die Tabletten (20) angeordnet ist.

6. Vorrichtung nach einem der vorangehenden Ansprüche, **dadurch gekennzeichnet, dass** die Aufladevorrichtung (23) ein geerdetes Gehäuse (54) und ein abgeschirmtes Hochspannungskabel (55), das mit einer Hochspannungsquelle (56) verbunden ist, aufweist, wobei das abgeschirmte Hochspannungskabel (55) innerhalb des Gehäuses (54) in einer Entladungsspitze (60) mündet.

7. Vorrichtung nach Anspruch 6, **dadurch gekennzeichnet, dass** die Entladungsspitze (60) in einen kegelförmigen Hohlraum (57) eines Kunststoffklotzes (59) innerhalb des Gehäuses (54) hineinragt.

8. Vorrichtung nach einem der vorangehenden Ansprüche, **dadurch gekennzeichnet, dass** der Ladungsdetektor (40) ein als Hohlkörper ausgebildetes Sensorelement (2) mit einem geschlossenen umlaufenden Mantel (4) aus einem leitenden Material und einer offenen oberen Eintrittsseite (6) sowie einer offenen unteren Austrittsseite (8) aufweist, wobei das Sensorelement (2) in seinem Innenraum von der Eintrittsseite (6) zur Austrittsseite (8) einen Durchgangspfad (A) für die Tabletten (20) definiert und wobei der Mantel (4) über einen Widerstand (12) geerdet (10) ist, und dass der Ladungsdetektor außerdem mindestens ein nahe der Außenfläche des Mantels (4) des Sensorelements (2) angeordnetes Aufnahmeelement (16) aus leitendem Material aufweist, das von der Außenfläche des Mantels (4) des Sensorelements (2) galvanisch getrennt ist.

9. Vorrichtung nach Anspruch 8, **dadurch gekennzeichnet, dass** das Aufnahmeelement (16) mit einer Umwandlungs-/ Verstärkungseinheit (14) verbunden ist, welche die im Aufnahmeelement (16) bei Durchtritt einer Tablette (20) durch das Sensorelement (2) erzeugten Spannungsimpulse in ein auswertbares Signal umwandelt oder verstärkt.

10. Vorrichtung nach Anspruch 9, **dadurch gekennzeichnet, dass** die Auswerteeinheit (18) darauf ausgerichtet ist, die Signale der Umwandlungs-/ Verstärkungseinheit (14) zu empfangen und einen Vergleich zwischen Sollwerten der Umwandlungs-/ Verstärkungseinheit (14) für eine bestimmte Tablettensorte und den von der Umwandlungs-/ Verstärkungseinheit (14) gelieferten Ist-Werten durchzuführen.

11. Vorrichtung nach einem der Ansprüche 8 bis 10, **dadurch gekennzeichnet, dass** das Sensorelement (2) als kurzer Hohlzylinder aus Metall mit im Wesentlichen kreisförmigem Querschnitt ausgebildet ist.

12. Vorrichtung nach einem der Ansprüche 8 bis 11, **dadurch gekennzeichnet, dass** mehrere Aufnahmeelemente (16) um die Außenfläche des Mantels (4) des Sensorelements (2) verteilt sind.

13. Verfahren zur Überprüfung bewegter Tabletten (20) mit folgenden Schritten:
Entladen von vorbeigeführten Tabletten (20) in einer Entladevorrichtung (21);
Aufladen der vorbeigeführten entladenen Tabletten (20) in einer Aufladevorrichtung (23); und
Detektieren der von der Aufladevorrichtung (23) auf die Tabletten (20) aufgebrachten Ladungen (22) in einem Ladungsdetektor (40).

14. Verfahren nach Anspruch 13, **dadurch gekennzeichnet, dass** eine Auswerteeinheit (18) auf Basis der vom Ladungsdetektor (40) gemessenen Werte eine dem Ladungsdetektor (40) nachgeschaltete Sortiereinrichtung (42) für die Tabletten (20) steuert.

15. Verfahren nach Anspruch 13 oder 14, **dadurch gekennzeichnet, dass** der Schritt des Aufladens unmittelbar nach dem Schritt des Entladens erfolgt, und dass zwischen dem Schritt des Aufladens und dem Schritt des Detektierens der Ladungen (22) eine weitere Aufladung oder eine Entladung der Tabletten (20) verhindert wird.
